Europäisches Patentamt

European Patent Office

Office européen des brevets

(19)

(11) Numéro de publication: **0 021 982**
**A1**

# (12) DEMANDE DE BREVET EUROPEEN

(21) Numéro de dépôt: **80400884.5**

(22) Date de dépôt: **17.06.80**

(51) Int. Cl.³: **G 06 G 9/00**
**G 01 N 15/02, G 02 B 27/46**

(30) Priorité: **18.06.79 FR 7915519**

(43) Date de publication de la demande:
**07.01.81 Bulletin 81/1**

(84) Etats Contractants Désignés:
**BE CH DE FR GB IT LI**

(71) Demandeur: **OMNIUM DE REALISATIONS INDUSTRIELLES ET COMMERCIALES**
**12, rue Jean Nicot**
**F-75007 Paris(FR)**

(72) Inventeur: **Bonnet, Georges**
**Villa la Cigale Quartier Montauban**
**F-83190 Ollioules(FR)**

(72) Inventeur: **De Bazelaire, Eric**
**72, Boulevard Eugène Pelletan**
**F-83000 Toulon(FR)**

(74) Mandataire: **Mongredien, André et al,**
**c/o Brevatome 25, rue de Ponthieu**
**F-75008 Paris(FR)**

(54) Procédé et dispositif de traitement optique d'objets par intercorrélation avec des anneaux.

(57) Procédé et dispositif optiques d'étude d'une famille d'objets basés sur une intercorrélation.

Selon l'invention, pour comparer des objets à un objet de référence, on réalise l'intercorrélation optique par holographie de FOURIER de l'ensemble des objets avec un anneau de référence.

Application aux contrôles de pièces, grains, bulles, gouttes, etc...

FIG. 9

EP 0 021 982 A1

1

## PROCEDE ET DISPOSITIF DE TRAITEMENT OPTIQUE D'OBJETS PAR INTERCORRELATION AVEC DES ANNEAUX

La présente invention a pour objet un procédé de traitement optique d'une famille d'objets, ce traitement pouvant consister en un dénombrement et/ou une localisation et/ou un classement selon un critère de taille etc... Les objets traités peuvent être des grains, des bulles, des gouttes, des nodules, des pièces, des lettres, des signes, etc...

Le procédé de l'invention met en oeuvre une technique connue utilisant l'holographie de FOURIER. Cette technique est décrite notamment dans l'article de A. VANDER LUGT intitulé "Signal Detection by Complex Spatial Filtering" publié dans la revue IEEE Transactions on Information Theory vol. IT-10 (1964) p. 139 à 145. Selon cette technique, on compare la forme de l'objet à traiter avec une référence de même forme, en réalisant l'intercorrélation optique entre l'objet et la référence. De façon plus préc établit tout d'abord un hologramme de l'objet de référence choisi, à l'aide d'une source cohérente monochromatique (en général un laser), et on enregistre cet hologramme ; puis on éclaire l'hologramme enregistré sous un angle convenable avec un champ reproduisant la transformée de FOURIER spatiale de l'élément à tester. On obtient alors, après une seconde transformée de FOURIER, une image qui représente la fonction d'intercorrélation entre l'élément à traiter et l'objet de référence.

L'intercorrélation par holographie de FOURIER, entre un objet à tester et un objet de référence est un moyen pour déterminer si, dans une famille donnée, il existe des objets identiques à la référence, et dans l'affirmative, combien il en existe, et où ils sont localisés. Cette technique est difficile à utiliser avec efficacité, principalement en raison de son défaut de sélectivité. Pour le montrer, on prendra le cas des objets circulaires pour lesquels les objets de référence sont des disques.

SP 1066 RS

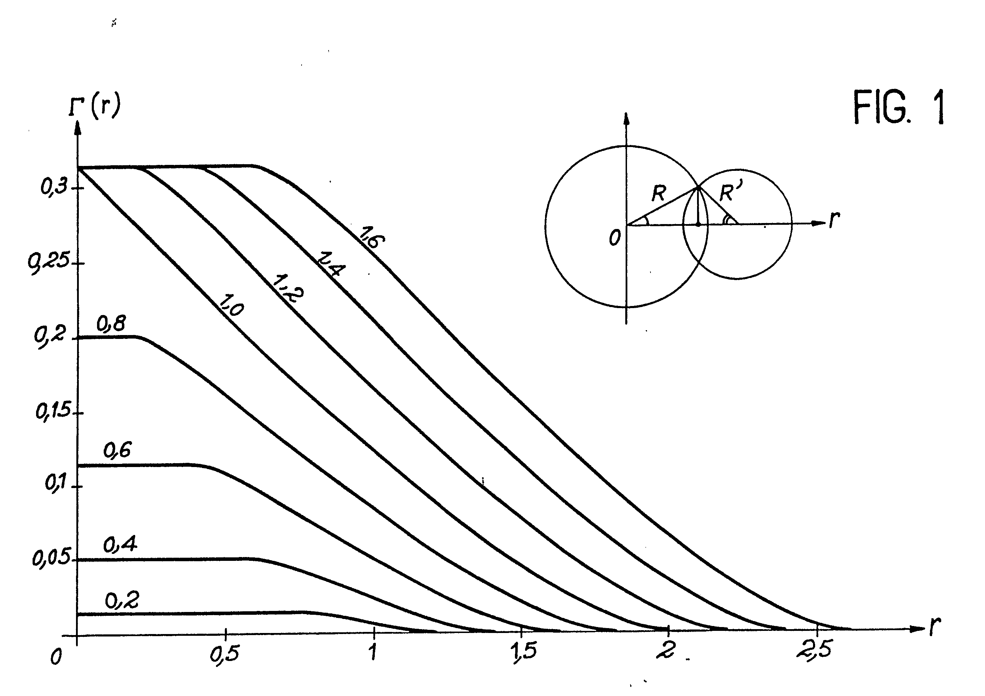

L'étude de l'intercorrélation d'un disque de référence de rayon R unité avec des disques de rayon R' variable a été réalisée par le demandeur et les résultats obtenus ont permis d'établir les courbes de la figure 1 où ont été portées en abscisses la distance séparant les centres du disque de référence et du disque à tester et en ordonnées la fonction d'intercorrélation $\Gamma(r)$ des deux disques. Les courbes indicées 0,2 ; 0,4 ; 0,8 ; 1 ; 1,2 ; 1,4 ; 1,6 correspondent à la fonction d'intercorrélation pour les valeurs correspondantes du rapport R'/R.

On voit, à l'analyse de ces courbes, que si les disques d'une famille ont des diamètres très différents, il est très difficile d'exploiter les résultats obtenus puisque la fonction d'intercorrélation ne présente pas de variation très marquée de son maximum en fonction du rayon : la méthode manque de sélectivité.

Le procédé de l'invention évite cet inconvénient et permet un traitement beaucoup plus précis. Ce résultat est obtenu en utilisant comme objet de référence, non plus un disque, mais un anneau. Par "anneau", on entend une bande étroite fermée, pouvant présenter des formes diverses, circulaire dans la plupart des cas, mais aussi elliptique ou autre. Un tel anneau peut être limité par deux cercles concentriques, l'un inscrit, l'autre circonscrit. Les "dimensions" de l'anneau font alors référence aux rayons de ces cercles et le "centre" de l'anneau fait référence au centre commun desdits cercles. Par ailleurs, "étroit" signifie que la différence des rayons des deux cercles délimitant l'anneau est faible devant le rayon du cercle circonscrit. Si l'anneau est circulaire, ses bords extérieur et intérieur se confondent naturellement avec les cercles circonscrit et inscrit.

De façon plus précise, l'invention a pour objet un procédé de traitement optique d'objets dans lequel, après avoir enregistré un hologramme d'un objet de référence approprié, on éclaire cet hologramme par une onde plane ayant un champ reproduisant la transformée de Fourier spatiale des objets à traiter et on forme la transformée de Fourier spatiale de l'hologramme ainsi éclairé, ce qui fournit une image représentant la fonction d'intercorrélation entre les objets traités et l'objet de référence, ce procédé étant caractérisé en ce que lesdits objets ayant des contours voisins d'un contour connu, on prend comme objet de référence au moins un anneau ayant ce contour connu et une largeur permettant d'englober lesdits contours voisins.

De préférence, l'objet de référence est constitué par au moins un anneau différentiel, cet anneau différentiel étant constitué par deux anneaux concentriques et de tailles différentes, ces anneaux étant traités, pendant l'enregistrement de l'hologramme, pour donner des contributions optiques de même énergie mais de phases opposées.

Les deux anneaux formant l'anneau différentiel peuvent être jointifs ou non jointifs.

Dans une variante avantageuse, l'objet de référence est constitué par plusieurs anneaux décalés, homogènes ou différentiels.

Si les objets à traiter sont sensiblement de contour circulaire, les anneaux sont eux aussi circulaires. Ils sont définis par leur rayon R qui est celui du cercle extérieur et par leur largeur E, différence entre les rayons des cercles intérieur et extérieur.

La largeur E de l'anneau est choisie en fonction de la finesse de résolution recherchée. Très généralement, le rapport E/R est compris entre 0,01 et 0,3. La sélectivité de la méthode est choisie en fonction de la précision de circularité de la famille d'objets ; elle peut dans certains cas particuliers d'objets sphériques ou circulaires atteindre par exemple 0,001.

La présente invention a également pour objet un dispositif qui met en oeuvre ce procédé. Ce dispositif comprend des moyens pour former une onde plane ayant un champ qui reproduit la transformée de Fourier

SP 1066 RS

4

spatiale des objets à traiter, et pour éclairer par cette onde un hologramme d'un objet de référence, des moyens pour former dans un plan-image la transformée de Fourier spatiale de l'hologramme ainsi éclairé, un récepteur optoélectronique disposé derrière le plan image, ce dispositif étant caractérisé en ce que l'hologramme utilisé est celui d'un objet constitué par au moins un anneau ayant le contour des objets à traiter.

Les caractéristiques et avantages de la présente invention apparaîtront mieux après la description qui suit d'exemples de réalisation donnés à titre explicatif et nullement limitatif. Cette description se réfère à des dessins sur lesquels :

- la figure 1, déjà décrite, représente un réseau de courbes montrant les variations de l'intercorrélation d'un disque de référence avec des disques de rayons différents ;

- la figure 2 représente un réseau de courbes montrant les variations de l'intercorrélation entre un anneau de référence et des disques de rayons différents ;

- la figure 3 représente un réseau de courbes montrant les variations de l'intercorrélation entre un anneau de référence et des anneaux de rayons différents ;

- la figure 4 représente un réseau de courbes montrant les variations de l'intercorrélation entre un anneau de référence différentiel et des disques de rayons différents ;

- la figure 5 représente les variations des maxima de la fonction d'intercorrélation disque-anneau différentiel en fonction du rapport des rayons ;

- la figure 6 illustre un anneau de référence homogène utilisable dans l'invention ;

- la figure 7 illustre un anneau de référence différentiel à anneaux jointifs (a) ou non jointifs (b) utilisable dans l'invention ;

SP 1066 RS

- la figure 8 représente un montage expérimental permettant d'obtenir l'hologramme d'anneaux ;

- la figure 9 illustre un mode particulier de réalisation d'un dispositif selon l'invention ;

- la figure 10 illustre une variante du dispositif dans lequel l'hologramme fonctionne par réflexion à l'incidence de Bragg ;

- la figure 11 illustre des moyens d'obtention d'un hologramme ;

- la figure 12 illustre une variante dans laquelle on utilise plusieurs anneaux différentiels.

A titre purement explicatif, la description qui suit se réfère à des anneaux circulaires, mais l'invention est plus générale et s'étend à toute forme d'anneau.

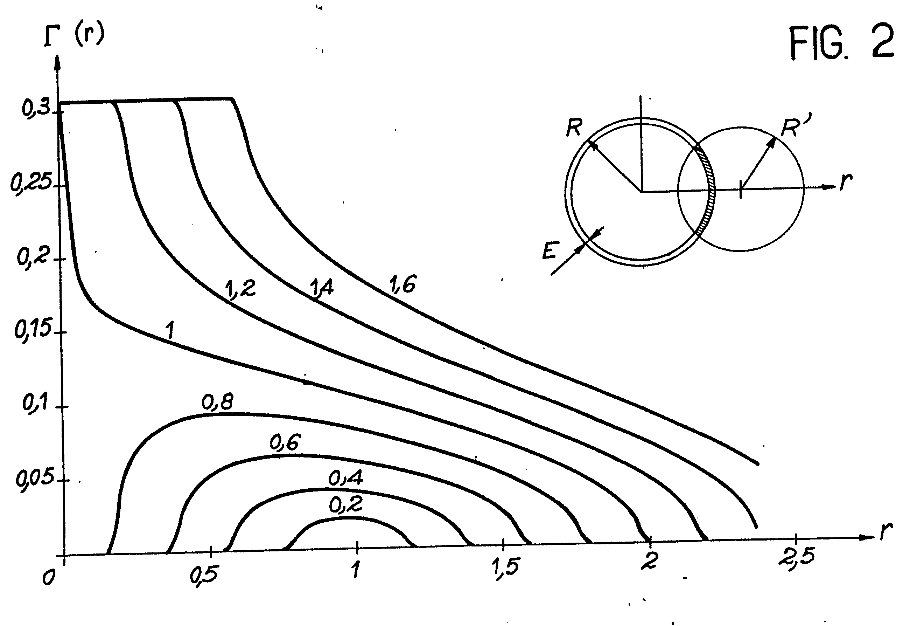

L'étude de l'intercorrélation d'un anneau circulaire de rayon R = 1 et de largeur E = 0,05 R avec des disques de rayon R' variable a été réalisée par le demandeur et les résultats ont permis d'établir les courbes de la figure 2 où ont été portées en abscisses la distance r séparant le centre des disques du centre de l'anneau de référence et en ordonnées la fonction d'intercorrélation $\Gamma(r)$. Les courbes indicées 0,8 ; 0,9 ; 1 ; 1,1 ; 1,2 correspondent à la fonction d'intercorrélation pour les valeurs correspondantes du rapport R'/R.

L'examen de la figure 2 montre que le procédé de l'invention présente sur le procédé antérieur un avantage appréciable lié au fait que la fonction d'intercorrélation présente, pour les disques de rayon égal ou supérieur à celui de l'anneau de référence, un maximum marqué et que le "bruit" dû aux disques de rayons inférieurs peut être pratiquement éliminé.

Une série de mesures, au cours de laquelle on fait varier régulièrement le rayon de l'anneau de référence permet d'obtenir aisément la fonction de répartition des disques d'une famille en fonction de leur rayon. Chaque mesure effectuée selon ce procédé permet de déterminer

SP 1066 RS

le nombre de disques dont le rayon est égal ou supérieur à celui de la référence d'où l'on tire la fonction de répartition de la famille. Il ne permet pas cependant d'accéder directement à une autre caractéristique très importante des familles d'objets : la distribution de probabilité. Dans le procédé objet de la présente invention, la distribution de probabilité correspond à la variation, en fonction du rayon de référence, du nombre de disques de la famille dont le rayon est compris entre ce rayon de référence et un rayon voisin dont l'écart relatif avec le rayon de référence est prédéterminé.

Pour pallier l'inconvénient qui vient d'être mentionné, un moyen consiste, après avoir transformé par une technique optique classique, chaque disque à tester en un anneau de même rayon R' et de largeur E' telle que E'/R' = E/R, R étant le rayon et E la largeur de l'anneau de référence, à réaliser selon la technique de l'invention l'intercorrélation par holographie de FOURIER entre la famille d'anneaux de rayons variables et l'anneau de référence.

Un procédé utilisant l'intercorrélation anneau-anneau donne sur le plan théorique des résultats très intéressants. En effet, le maximum de la fonction d'intercorrélation est encore plus marqué, puisque seuls les disques de rayons compris entre R - E et R donnent une réponse perceptible (distribution de probabilité).

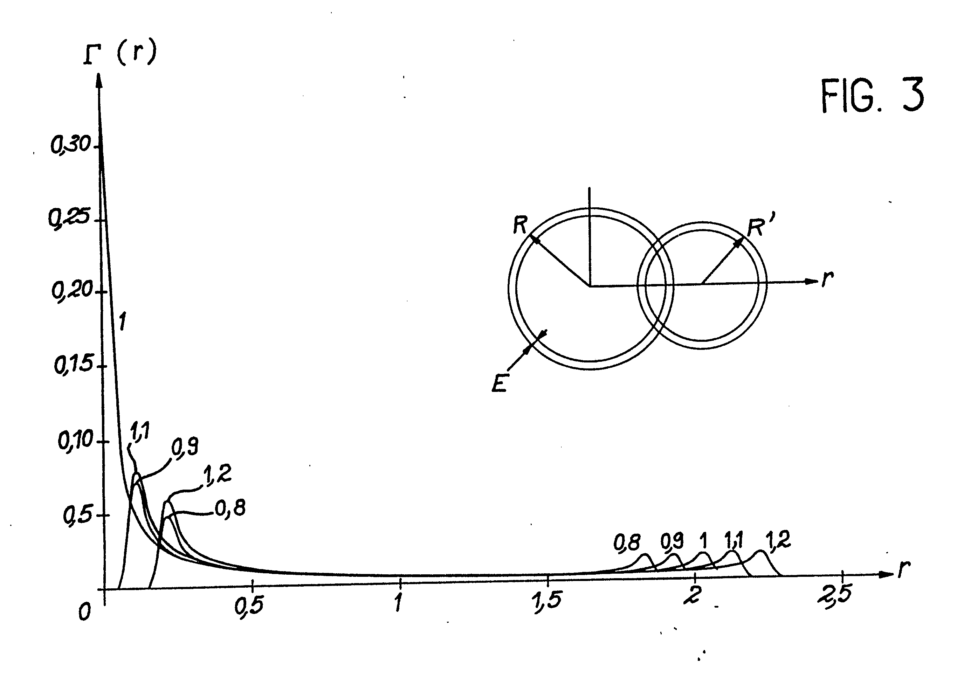

L'étude de l'intercorrélation d'un anneau de référence de rayon R égal à l'unité et de largeur E égale à 0,05 R avec des anneaux de rayon R' variable et de largeur E' égale à 0,05 R constante a été réalisée par le demandeur et les résultats obtenus ont permis d'établir les courbes de la figure 3, où ont été portées, en abscisses, la distance r séparant le centre de l'anneau de référence du centre de l'anneau à tester, et en ordonnées, la fonction d'intercorrélation $\Gamma(r)$ des anneaux.

SP 1066 RS

Les courbes indicées 0,8 ; 0,9 ; 1 ; 1,1 ; 1,2 correspondent à la fonction d'intercorrélation pour les valeurs correspondantes du rayon R'.

Comme on pourra le constater à l'analyse de la figure 3, le maximum de la fonction d'intercorrélation est très marqué pour les anneaux de rayon R et faible pour les anneaux de rayons voisins inférieurs ou supérieurs à R.

Cette technique présente toutefois l'inconvénient d'être difficile à mettre en oeuvre. En effet, la transformation optique d'un disque en anneau correspond en fait à une dérivation du signal. Cette dérivation ne peut être réalisée valablement que si le signal est pur ou, autrement exprimé, que si le disque est parfait. En effet, si tel n'est pas le cas, la dérivation ne fera qu'accentuer les défauts sans permettre d'atteindre un résultat satisfaisant. Les objets qui doivent être étudiés se présentent rarement sous la forme de disques parfaits et l'utilisation de cette tehnique peut n'être pas satisfaisante.

L'invention, dans une variante de mise en oeuvre, permet cependant d'atteindre un résultat équivalent, tout en évitant ces inconvénients.

Cette variante utilise un anneau de référence différentiel. Il s'agit d'un anneau constitué d'un premier anneau de rayon $R_1$ et de largeur $E_1$ faible devant $R_1$, d'un deuxième anneau concentrique de rayon $R_2$ supérieur à $R_1$ et de largeur $E_2$ faible devant $R_2$, les deux anneaux étant jointifs ou non; ces deux anneaux sont traités pour que leurs contributions optiques lors de la formation de l'hologramme, soient d'égales énergies mais en opposition de phase. Ce point sera repris plus loin.

On choisira la largeur des anneaux en fonction de la précision et de la finesse de résolution recherchées. En général, les anneaux ont même surface. Les caractéristiques de l'anneau différentiel sont alors simples à définir. En effet, il suffit de se fixer la largeur et le rayon d'un

des anneaux, $E_2$ et $R_2$ par exemple, pour en déduire automatiquement le rayon $R_1$ de l'autre anneau et sa largeur $E_1$.

Dans le cas des anneaux jointifs, si l'on désigne par $R_0$ le rayon du petit cercle de l'anneau intérieur, $R_0$ est donné par la relation :

$$R_0 = \sqrt{2\ R_1^2 - R_2^2}$$

et l'épaisseur est alors donnée par la relation :

$$E_1 = R_1 - R_0$$

Il est à remarquer que $E_2$ étant choisie en général faible devant $R_2$, $E_1$ aura une valeur très voisine de $E_2$.

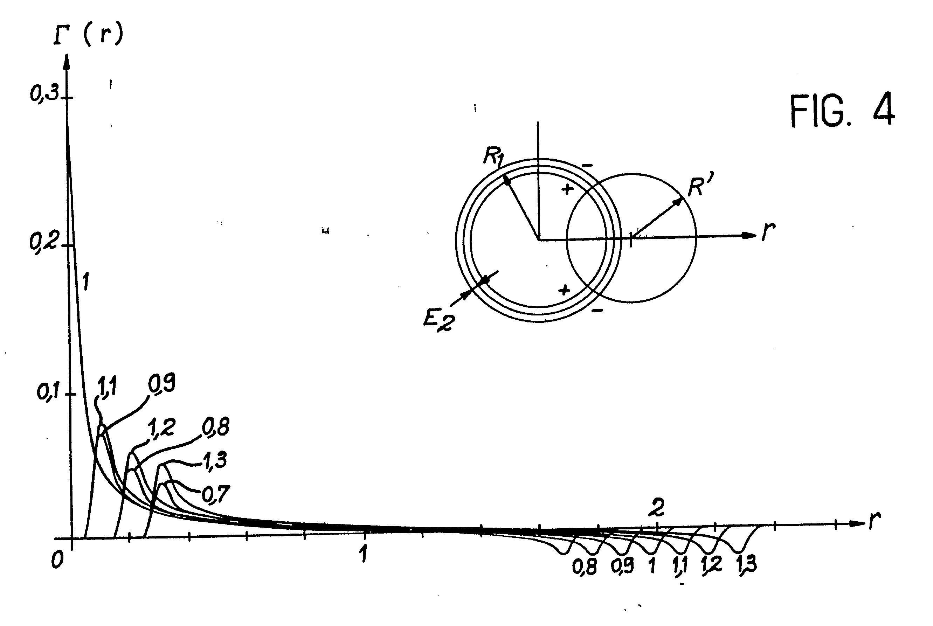

L'étude de l'intercorrélation d'un anneau de référence différentiel de rayon $R_1$ égal à 1 et de largeur $E_2$ égale à 0,05 ($R_2 = 1,05$, $E_1 = 0,0526$) avec des disques de rayons variables R', a été réalisée et les résultats obtenus ont permis d'établir les courbes de la figure 4. Les coordonnées et les indices utilisés sont les mêmes que ceux de la figure 3. Il est à noter que dans le cas de l'intercorrélation disque-anneau différentiel, le maximum de la fonction d'intercorrélation correspond aux disques de rayon $R_1$ ; c'est donc ce rayon qui servira de base au classement des disques.

On peut remarquer, en comparant les courbes des figures 3 et 4, que, pour une valeur de r inférieure à 0,5 environ, les courbes de même indice sont pratiquement identiques. On peut en déduire que, dans cette plage, l'intercorrélation d'un disque et d'un anneau différentiel peut être assimilée à l'intercorrélation de deux anneaux.

Il est à noter que lorsque r augmente, la fonction d'intercorrélation disque-anneau différentiel décroît plus vite, et devient même négative ($r > 1,5$). Ceci est dû au fait que l'intercorrélation fait alors intervenir principalement l'anneau extérieur qui est optiquement de signe opposé à celui de l'anneau intérieur, ce qui confère ainsi à la fonction $\Gamma(r)$ une valeur négative.

SP 1066 RS

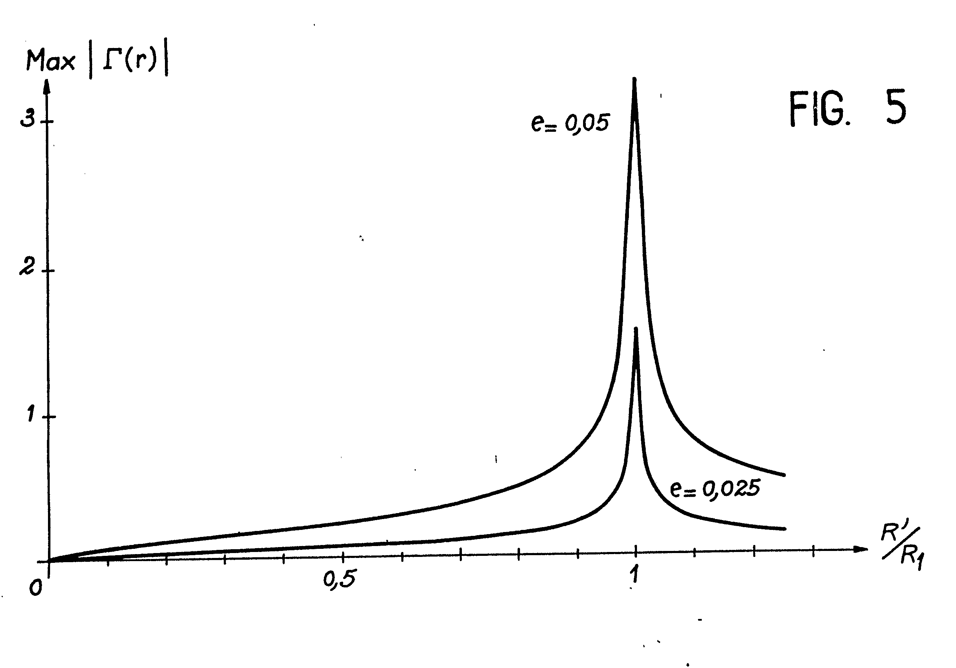

La résolution spatiale obtenue par cette variante du procédé est illustrée par la courbe des maxima de la fonction d'intercorrélation disque-anneau différentiel en fonction du rapport $R'/R_1$. Cette courbe a été tracée pour $E_2 = 0,05$ et $E_2 = 0,025$ (Fig. 5). La largeur du pic à mi-hauteur (lié au pouvoir séparateur spatial) est de l'ordre de $E_2$, ce qui signifie que l'énergie qui passe à travers le disque objet est concentrée en son centre dans le plan d'autocorrélation.

Il est essentiel, pour que le procédé donne toute satisfaction, que l'anneau de référence et l'établissement de son hologramme soient réalisés avec un maximum de soin.

Les anneaux de référence utilisés de préférence dans le procédé de l'invention et sa variante sont réalisés au moyen d'un microbélinographe. A l'aide de cet appareil, on éclaire chaque point d'information d'une plaque photographique avec une luminance calculée par ordinateur, on développe ensuite la plaque photographique, puis on la place dans le montage optique destiné à établir l'hologramme.

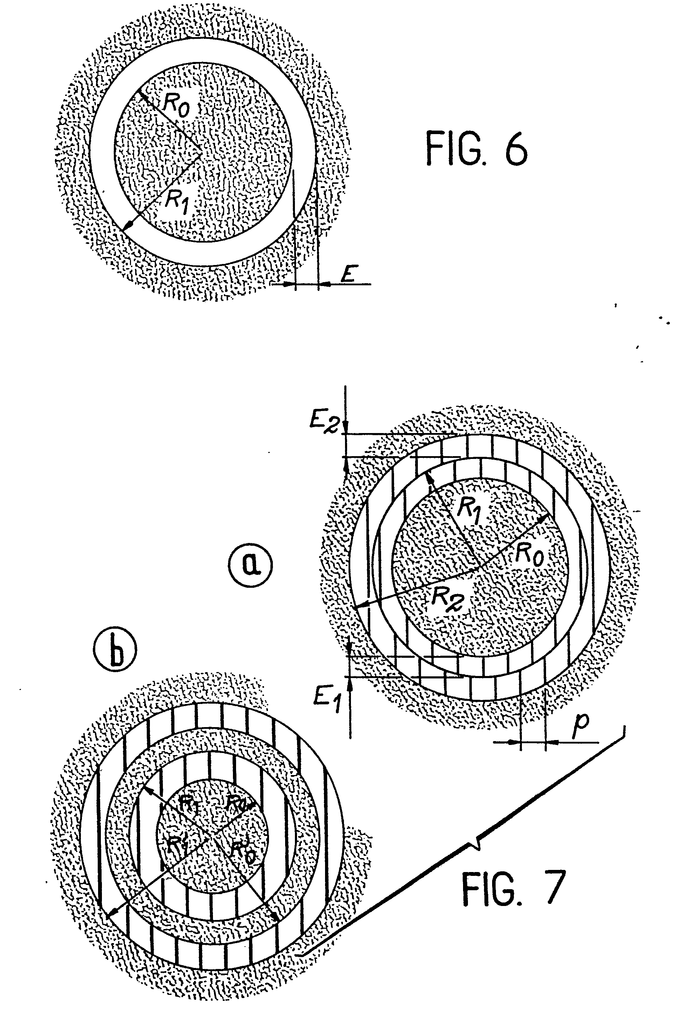

Un anneau de référence homogène utilisable dans l'invention est illustré figure 6 avec les notations déjà définies : largeur E égale à $R_1 - R_0$, $R_0$ étant le rayon du cercle intérieur et $R_1$ le rayon du cercle extérieur.

Un anneau de référence différentiel utilisable dans l'invention est réalisé par la lumière diffractée par les objets illustrés sur la figure 7 : avec des anneaux jointifs sur la partie (a) et des anneaux non jointifs sur la partie (b).

Ces anneaux sont modulés en densité par une sinusoïde de pas "p" représentée symboliquement par des hachures verticales. La modulation du premier anneau est en opposition de phase spatiale avec celle du second anneau. Lors de la prise de l'hologramme d'un tel objet, les anneaux sont éclairés par une onde plane inclinée obliquement sur le plan des anneaux de sorte que la lumière diffractée ait un plan d'onde parallèle au plan des anneaux. L'opposition de phase spatiale des sinusoïdes modulant les anneaux induit une opposition de phase temporelle sur la lumière diffractée par lesdits anneaux, ce qui rend l'anneau "différentiel". L'énergie de l'onde diffractée par un tel anneau différentiel doit être la même pour les deux anneaux qui le composent, de sorte qu'on prend en général des anneaux de même surface ; mais on pourrait prendre des anneaux de surfaces différentes, à condition de compenser cet écart par une atténuation de la sinusoïde sur l'anneau le plus grand pour rétablir l'égalité des ondes diffractées.

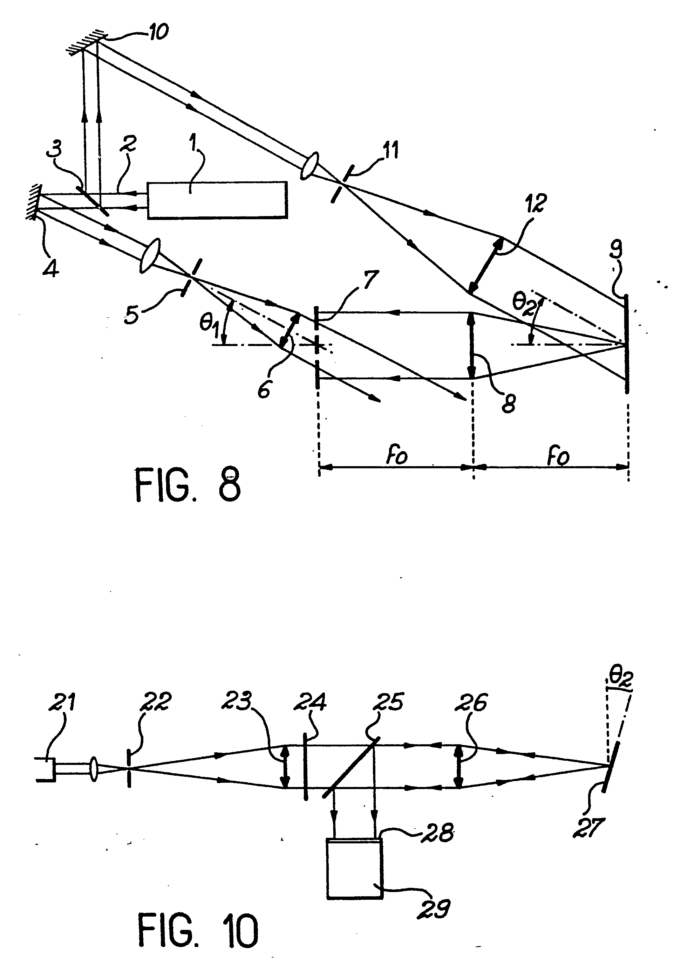

De façon plus précise, l'hologramme des anneaux utilisés dans l'invention (homogènes ou différentiels) est établi avec un appareil qui, à titre d'exemple non limitatif, est illustré sur la figure 8.

Une source lumineuse monochromatique (laser) 1 fournit un faisceau de lumière cohérente 2. Une fraction de celui-ci traverse une lame séparatrice 3, est réfléchie par un miroir 4 et traverse un filtre spatial 5 puis un objectif 6 dont la focale est telle que l'ensemble optique ainsi constitué permet d'éclairer, sous un angle $\theta_1$, par une onde plane le plan objet 7 qui contient l'anneau de référence. La lumière diffractée en 7 est collectée par un objectif 8 dont la distance focale est $f_o$ ; cet objectif forme la transformée de FOURIER du plan 7 dans un plan 9. La lame séparatrice 3 fonctionnant en réflexion envoie une autre fraction du faisceau 2 sur un miroir 10, le faisceau réfléchi traverse un filtre spatial 11, puis un objectif 12 dont la focale est telle que l'ensemble optique 3, 10, 11, 12 ainsi constitué produise une surface d'onde plane qui éclaire sous un angle $\theta_2$ le plan 9. Les chemins optiques empruntant les éléments 3, 4, 5, 6, 7, 8, 9 et 3, 10, 11, 12, 9 sont égaux et il y a interférence dans le plan 9. Il suffit de placer une plaque holographique dans le plan 9 pour enregistrer l'hologramme de l'anneau placé dans le plan 7, qui, développé, sera utilisé dans le procédé de l'invention.

SP 1066

Lorsqu'on utilise ce montage pour établir l'hologramme de l'anneau différentiel, l'angle $\theta_1$ (inclinaison de la direction d'éclairement avec la normale au plan contenant l'anneau) sera fonction de la longeur d'onde $\lambda$ de la source cohérente utilisée et du pas p de la sinusoïde de phase hachurant les anneaux (cf figure 7) selon la relation $\theta_1 = \frac{\lambda}{p}$ ($\theta_1$ étant petit).

Lorsqu'on utilise ce montage pour établir l'hologramme de l'anneau homogène, cet angle $\theta_1$ est nul, ce qui correspond, dans la relation précédente, à un pas p infini.

Les anneaux de référence peuvent être réalisés en utilisant la technique des couches minces. Cette technique consiste à recouvrir une plaque transparente d'une couche métallique mince obtenue par exemple par évaporation sous vide, en prenant soin, au cours de l'opération, de cacher la surface correspondant à l'anneau désiré. Pour réaliser l'anneau différentiel, il suffit de préparer selon le même processus un anneau dont la surface est celle des deux anneaux de l'anneau différentiel puis de déposer sur l'un de ces anneaux, en prenant soin de cacher le reste de la surface, un matériau diélectrique dont l'épaisseur est celle d'une lame demi-onde. Les deux anneaux seront ainsi en opposition de phase.

Il est également possible de réaliser un hologramme d'anneau différentiel à partir d'un anneau simple avec un montage classique en opérant en deux étapes. Au cours de la première étape, on établit classiquement l'hologramme du premier anneau puis, au cours de la deuxième étape, on établit sur la même plaque holographique l'hologramme du deuxième anneau en veillant à ce qu'ils soient concentriques et jointifs et qu'ils aient la même surface et en introduisant pour le deuxième anneau un déphasage de $\pi$ au moyen d'une lame de phase placée sur le faisceau de référence.

Cette variante de réalisation de l'anneau de référence est cependant plus délicate à mettre en oeuvre que la première.

SP 1066 RS

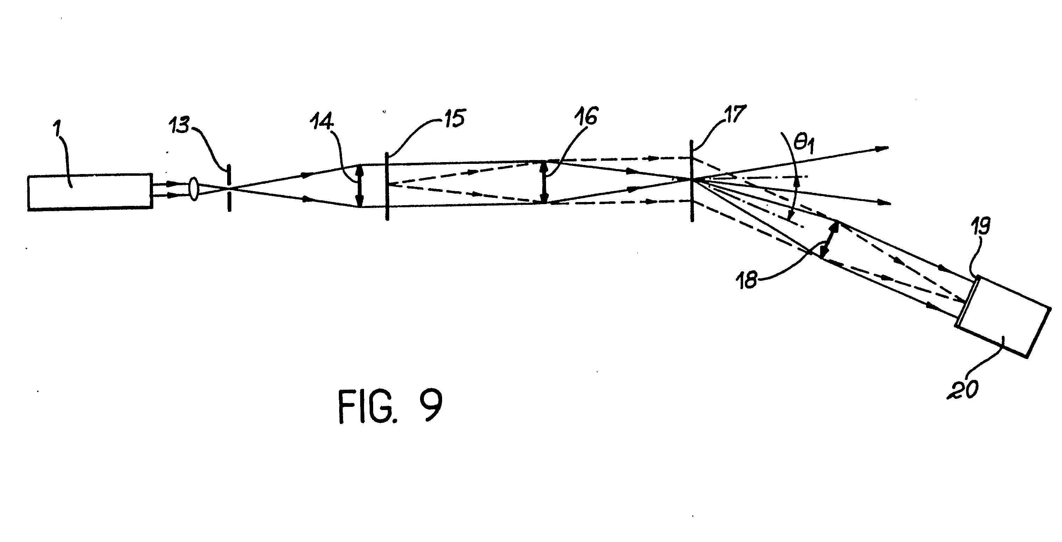

L'hologramme de l'anneau de référence étant établi, celui-ci est utilisé dans un dispositif permettant d'obtenir une intercorrélation entre les objets à tester et l'anneau de référence. Plusieurs montages sont possibles. Ils dérivent tous plus ou moins du montage à double diffraction illustré sur la figure 9.

Tel que représenté sur cette figure, le montage comprend :

- une source de lumière cohérente monochromatique 1, de préférence identique à celle utilisée pour l'établissement de l'hologramme ;

- un filtre spatial 13 ;

- un objectif 14 dont la focale est telle qu'il permet d'éclairer par une onde plane un plan objet 15 contenant les objets à identifier ;

- un objectif à focale variable 16 de même axe optique que l'objectif 14, qui crée sur un plan 17 la transformée de FOURIER spatiale des objets contenus dans le plan 15 avec un diamètre proportionnel à sa distance focale,

- un plan 17 contenant l'hologramme de l'anneau de référence établi antérieurement ;

- un objectif à focale variable 18, qui est couplé avec l'objectif 16, de manière à ce que leurs distances focales aient toujours une valeur égale, de sorte que dans le plan focal 19, la dimension de la pupille est toujours égale à celle du plan 15 ; l'axe optique de l'objectif 18 forme avec l'axe optique des objectifs 14 et 16 l'angle $\theta_2$ défini lors de l'établissement de l'hologramme (cf. figure 8); l'objectif 18 produit, par transformée de FOURIER, dans le plan-image 19, la fonction d'intercorrélation recherchée entre les objets placés dans le plan 15 et l'objet de référence dont l'hologramme a été placé dans le plan 17 ;

- un récepteur 20 transformant en signal électrique le flux lumineux reçu par le plan-image 19 ; ce récepteur 20 peut par exemple être une caméra de télévision ou un photomultiplicateur.

Le principe de fonctionnement de ce dispositif est le suivant : dans le plan 15 est placée une famille d'objets, par exemple de disques de rayons différents, et dans le plan 17 l'hologramme d'un anneau homogène de rayon R. Les focales des objectifs 16 et 18 sont réglées à la valeur fo utilisée pour l'enregistrement de l'hologramme de l'anneau (cf. figure 8).

S'il existe des disques de rayon R dans le plan objet 15, la dimension de la transformée de FOURIER de la famille de ces disques est la même que celle de l'anneau enregistré sur l'hologramme. On aura alors une intercorrélation maximum dans le plan 19 où vont apparaître autant de points lumineux que de disques de rayon au moins égal à R, ces points étant localisés aux mêmes coordonnées que les centres des disques en question dans le plan 15.

Pour dénombrer et localiser des disques de rayons différents de R, il suffit simplement de changer le réglage des focales, et d'étudier les nouveaux points lumineux obtenus qui pour cette nouvelle distance focale ont la même transformée de FOURIER que la référence.

Pour obtenir la fonction de répartition des disques placés dans le plan 15, il suffit de compter le nombre de points lumineux présents dans le plan 19 pour chaque valeur de la distance focale des objectifs 16 et 18, et d'afficher ce nombre en fonction de la distance focale en utilisant par exemple une table traçante x, y.

Si l'on remplace, dans le plan 17, l'hologramme de l'anneau homogène par celui d'un anneau différentiel, un processus analogue permettra de déterminer à chaque mesure, le nombre de disques de rayon égal au rayon $R_1$ de l'anneau différentiel et leur localisation.

Il est à noter que ce dispositif, dans lequel

SP 1066 RS

deux objectifs à focale variable sont couplés, permet de simplifier la mise en oeuvre du procédé. En effet, l'étude des disques de la famille est réalisée en changeant à chaque mesure, non le rayon de la référence, mais le rayon apparent des disques.

Dans le cas où l'on utilise comme récepteur 20 une caméra de télévision, on peut utiliser un amplificateur à seuil pour éliminer les termes parasites des pieds des fonctions d'intercorrélation. Il suffit alors d'écrêter les pics restants et de les compter de façon numérique ou analogique.

Dans le cas où l'on utilise comme récepteur 20 un photomultiplicateur dont la surface est égale ou supérieure à celle de la pupille du plan 19, l'intégration est faite directement par le photomultiplicateur et le signal fourni correspond à la somme des pics. Cette technique ne permet pas d'éliminer les pieds des fonctions d'intercorrélation ; de plus, il faut alors utiliser un filtre passe-bas électronique pour minimiser le bruit.

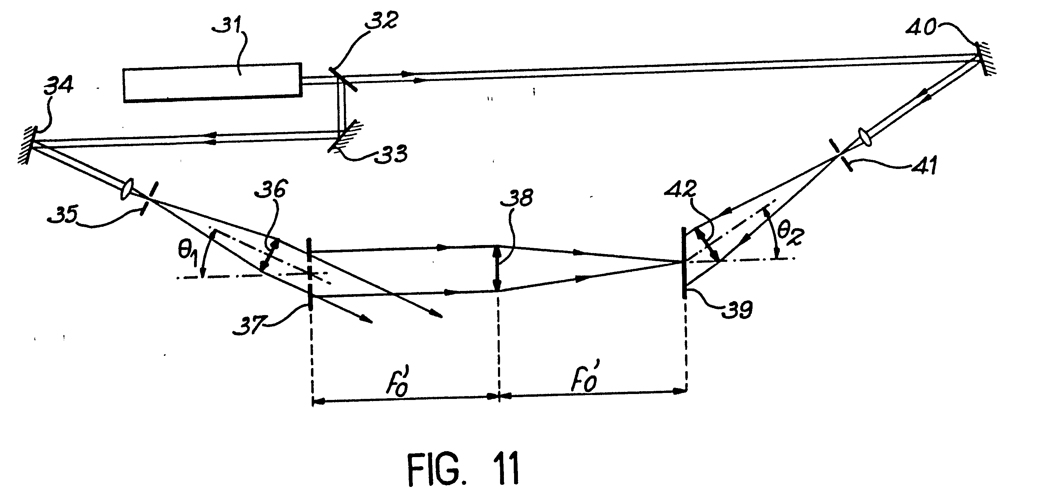

Pour simplifier le montage de la figure 9, notamment pour la réalisation d'un dispositif industriel, on peut utiliser un montage comprenant un seul objectif à focale variable, montage pour lequel il est nécessaire que l'hologramme fonctionne par réflexion dans l'angle de BRAGG. Ce montage particulier, illustré par la figure 10, comprend :

- une source de lumière cohérente monochromatique 21 ;
- un filtre spatial 22 ;
- un objectif 23 dont la focale est telle que le système permet d'éclairer par une onde plane un plan objet 24 contenant la famille d'objets à traiter ;
- une lame séparatrice 25 qui est traversée par le faisceau issu de 24 ;
- un objectif à focale variable 26 qui réalise la transformée de FOURIER spatiale du plan 24 dans un plan 27 ;

- ledit plan 27 contenant l'hologramme de l'anneau de référence et dont la normale fait avec l'axe optique un angle $\theta_2$ égal à celui défini lors de l'établissement de l'hologramme de l'anneau (cf. figure 8) ;

- un plan-image 28 recevant par réflexion sur la lame séparatrice 25 la fonction d'intercorrélation du plan 24 avec l'objet de référence dont l'hologramme a été placé dans le plan 27.

- un récepteur 29;

Dans ce montage particulier, les rayons lumineux traversent deux fois le même objectif à focale variable qui réalise la transformation de FOURIER à l'aller et au retour.

Pour ce montage, il est nécessaire de disposer dans le plan 27 un hologramme travaillant par réflexion, ce qui peut être établi par exemple grâce au montage de la figure 11. Ce montage comprend :

- une source lumineuse cohérente monochromatique 31 ;

- une lame séparatrice 32 divisant en deux faisceaux le faisceau issu de 31 ;

- un système de miroirs 33-34 renvoyant le faisceau réfléchi par la lame 32 à travers un filtre spatial 35,

- un objectif 36 délivrant une onde plane ;

- un plan 37 dont la normale fait avec l'axe optique de l'objectif 36 un angle $\theta_1$,

- un objectif 38 de focale fo qui recueille la lumière diffractée par le plan 37 et qui est en fait la transformée de FOURIER spatiale dans un plan 39 ;

- un miroir 40 recevant le faisceau transmis par la lame 32 et qui le réfléchit vers un filtre spatial 41,

- un objectif 42 délivrant une onde plane qui constitue une onde de référence, la normale au plan 39 faisant un angle $\theta_2$ par rapport à l'axe optique de l'objectif 42.

Le fonctionnement de ce montage est tout à fait analogue à celui de la figure 8, la seule différence étant que le faisceau de référence éclaire le plan 39 qui contient la plaque holographique du côté opposé, mais avec le même angle $\theta_2$.

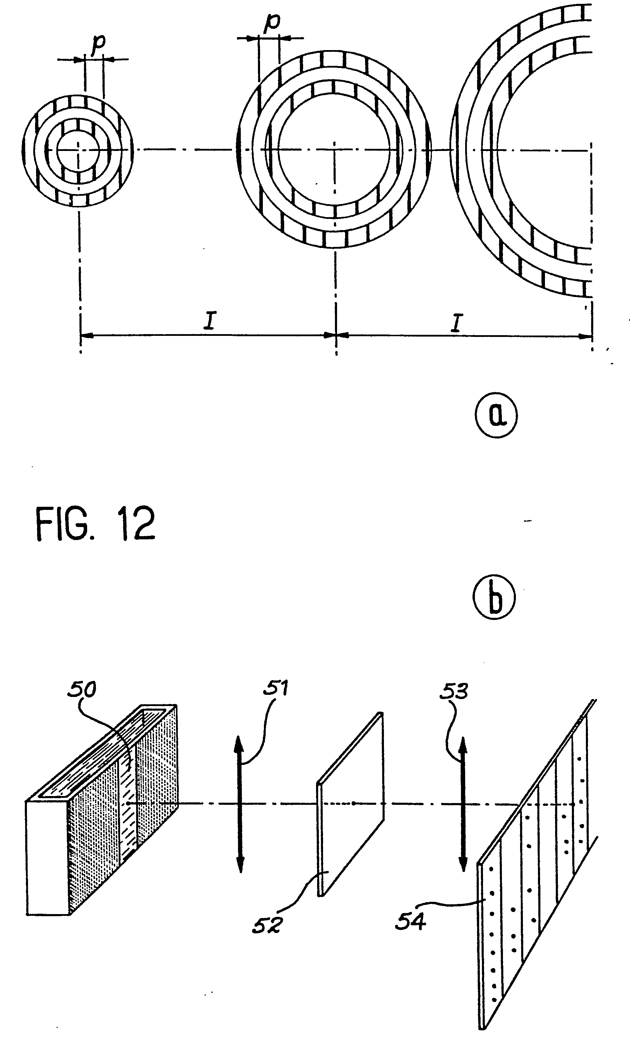

Si l'on veut éviter les opérations de réglage de distance focale mentionnées plus haut et effectuer néanmoins l'étude d'une famille d'objets de dimensions différentes, on peut utiliser une variante de l'invention, qui consiste en ceci. Au lieu d'utiliser comme objet de référence un anneau unique, on utilise une pluralité d'anneaux de tailles différentes (homogènes ou différentiels) ces anneaux ayant leurs centres alignés et décalés régulièrement d'un intervalle déterminé T (voir figure 12a). Lors de l'enregistrement de l'hologramme, tous ces anneaux sont éclairés par la même onde plane comme indiqué plus haut à propos d'un anneau unique. On obtient alors un hologramme d'une référence multiple. Cet hologramme permet d'étudier en une seule mesure toute une classe d'objets de dimensions différentes avec un montage qui est illustré schématiquement sur la figure 12b.

Tel que représenté, le montage comprend : une fente objet 50 ayant une certaine largeur, un premier objectif 51, un plan 52 où est placé l'hologramme multiple en question obtenu avec des anneaux de référence dont les centres sont écartés d'un intervalle égal à la largeur de la fente 50, un second objectif 53, un plan image 54 dans lequel on obtient autant d'images que d'anneaux de référence utilisés. Ces images sont adjacentes et décalées le long d'une direction perpendiculaire à la fente. Chacune de ces images représente la fonction d'intercorrélation de l'objet à étudier diaphragmé par la fente 50 avec un des anneaux de référence. Le photodétecteur (non représenté) peut être alors avantageusement de type vidicon fonctionnant par balayage ligne par ligne du plan image dans un sens parallèle à la fente objet. Ainsi, après un seul balayage du plan, on obtient la fonction de répartition des objets de la famille étudiée.

Le procédé de l'invention est utilisable notamment pour étudier toute la gamme des objets présentant une forme sensiblement circulaire ou sphérique. A titre d'exemple, on peut citer :

- l'étude des bulles de gaz présentes dans un liquide ;
- l'étude des gouttes liquides présentes soit dans un liquide non miscible (émulsion) soit dans un gaz (aérosols) ;
- l'étude de la granulométrie des grains en suspension dans un liquide.

Les mesures correspondantes peuvent être réalisées soit directement sur l'échantillon en plaçant celui-ci dans une gaine transparente disposée dans le plan objet du dispositif, soit par l'intermédiaire de photographies de ces échantillons.

On peut citer également, comme application de l'invention, l'étude de la granulométrie des nodules sous-marins. Cette étude s'effectue à partir des images obtenues par l'intermédiaire d'une caméra et d'un écran de télévision photographié ou par l'intermédiaire d'une caméra et d'un imageur cohérent.

Le procédé de l'invention peut naturellement s'appliquer à l'étude d'objets qui, bien que non circulaires, se présentent sous la forme voisine de surfaces homothétiques délimitées par des courbes fermées simples. En effet, il suffira alors de compléter les montages optiques illustrés ci-dessus par un système optique approprié - prisme ou miroir - permettant la mise en rotation du plan objet ou du plan de l'hologramme.

L'invention est également applicable à la reconnaissance des formes et notamment des lettres, chiffres ou signes divers.

SP 1066 RS

REVENDICATIONS

1. Procédé de traitement optique d'objets dans lequel, après avoir enregistré un hologramme d'un objet de référence approprié, on éclaire cet hologramme par une onde ayant un champ reproduisant la transformée de Fourier spatiale des objets à traiter et on forme la transformée de Fourier spatiale de l'hologramme ainsi éclairé, ce qui fournit une image représentant la fonction d'intercorrélation entre les objets traités et l'objet de référence, caractérisé en ce que lesdits objets ayant des contours voisins d'un contour connu , on prend comme objet de référence au moins un anneau ayant ledit contour connu et une largeur permettant d'englober lesdits contours voisins.

2. Procédé selon la revendication 1, caractérisé en ce que l'objet de référence est constitué par au moins un anneau différentiel, cet anneau différentiel étant constitué par deux anneaux concentriques et de tailles différentes, ces anneaux étant traités, pendant l'enregistrement de l'hologramme, pour donner des contributions optiques de même amplitude mais de phases opposées.

3. Procédé selon la revendication 2, caractérisé en ce que les deux anneaux formant l'anneau différentiel sont disjoints.

4. Procédé selon la revendication 2, caractérisé en ce que les deux anneaux formant l'anneau différentiel sont jointifs.

5. Procédé selon l'une quelconque des revendications 1 à 4, caractérisé en ce que ledit objet de référence est constitué par une pluralité d'anneaux de tailles différentes placés côte à côte, les centres des anneaux étant décalés régulièrement d'un intervalle déterminé.

6. Procédé selon l'une quelconque des revendications 1 à 5, caractérisé en ce que les anneaux sont circulaires, ont un rayon extérieur $R_1$ et une largeur E, celle-ci étant faible devant $R_1$.

7. Procédé selon la revendication 6, caractérisé en ce que le rapport $E/R_1$ est compris entre 0,001 et 0,3.

8. Procédé selon la revendication 2, caractérisé en ce que, pour former l'hologramme d'un anneau différentiel, on utilise la lumière diffractée par un ensemble de deux anneaux concentriques modulés spatialement en densité par deux sinusoïdes unidimensionnelles de même période "p" en opposition de phase spatiale entre les deux anneaux, ledit ensemble étant éclairé par une onde plane de longueur d'onde $\lambda$, inclinée par rapport à la normale au plan des anneaux d'un angle $\theta_1$ égal à $\lambda/p$, de manière que ladite lumière diffractée forme deux anneaux concentriques de même énergie et en opposition de phase temporelle.

9. Dispositif de traitement optique d'objets, comprenant des moyens (1, 13, 14, 16) pour former une onde plane ayant un champ qui reproduit la transformée de Fourier spatiale des objets à traiter, et pour éclairer par cette onde un hologramme (17) d'un objet de référence, des moyens (18) pour former dans un plan-image (19) la transformée de Fourier spatiale de l'hologramme ainsi éclairé, un récepteur optoélectronique (20) disposé derrière ce plan image (19), ce dispositif étant caractérisé en ce que l'hologramme utilisé est celui d'un objet constitué par au moins un anneau ayant le contour des objets à traiter.

SP 1066 RS

FIG. 1

FIG. 2

FIG. 3

FIG. 4

FIG. 5

e= 0,05

e= 0,025

$Max \, |\Gamma(r)|$

$R'/R_1$

FIG. 6

FIG. 7

FIG. 8

FIG. 10

FIG. 9

FIG. 11

(a)

# FIG. 12

(b)

0021982

Office européen des brevets

**RAPPORT DE RECHERCHE EUROPEENNE**

Numéro de la demande

EP 80 40 0884

| Catégorie | Citation du document avec indication, en cas de besoin, des parties pertinentes | Revendication concernée | CLASSEMENT DE LA DEMANDE (int. Cl. 3) |
|---|---|---|---|
| A,D | IEEE TRANSACTIONS ON INFORMATION THEORY, vol. 10, 1964 NEW YORK (US) VAN DER LUGT: "Signal detection by complex spatial filtering", pages 139-145<br><br>* Pages 140-141,143 * | 1 | G 06 G 9/00<br>G 01 N 15/02<br>G 02 B 27/46 |
| A | APPLIED OPTICS, vol. 15, no. 2, février 1976 NEW YORK (US) S. ALMEIDA et al.: "Water pollution monitoring using matched spatial filters", pages 510-515<br><br>* Pages 511,513 * | 1 | |
| A | APPLIED OPTICS, vol. 12, no. 4, avril 1973 NEW YORK (US) A. ENGEL: "Additional filters enhancing the sensitivity of an optical correlator", pages 743-748<br><br>* Pages 746-747 * | 1 | **DOMAINES TECHNIQUES RECHERCHES (int. Cl. 3)**<br><br>G 06 G 9/00<br>G 02 B 27/46<br>G 01 N 15/02<br>G 03 H 1/16<br>G 06 K 9/76<br>G 02 B 5/32 |
| A | US - A - 3 871 769 (A. ENGEL et al.)<br><br>* Colonnes 2-3; figure 1 * | 1 | |
| A | US - A - 4 111 526 (B. JOSEPH)<br><br>* Colonnes 3-4; figures 4-6 *<br><br>./. | 1 | |

**DOCUMENTS CONSIDERES COMME PERTINENTS**

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interférence

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 30.08.1980 | BOEHM |

OEB Form 1503.1 06.78

| | **DOCUMENTS CONSIDERES COMME PERTINENTS** | | **CLASSEMENT DE LA DEMANDE (Int. Cl. ³)** |
|---|---|---|---|
| Catégorie | Citation du document avec indication, en cas de besoin, des parties pertinentes | Revendica-tion concernée | |
| A | JOURNAL OF THE OPTICAL SOCIETY OF AMERICA, vol. 61, nr. 4, avril 1971 NEW YORK (US) S.K. YAO et al.: "Spatial differen-tiation and integration by coherent optical-correlation method", pages 474-477 <br><br> * Page 475 * | 1 | |
| | | | **DOMAINES TECHNIQUES RECHERCHES (Int. Cl. ³)** |